# FASCICULE DE BREVET EUROPEEN

(11) **EP 1 789 218 B1**
(45) Date de publication et mention de la délivrance du brevet: **18.03.2009**
(21) Numéro de dépôt: 05775591.0
(22) Date de dépôt: 02.09.2005
(51) Int. Cl.: B22D 13/04

(54) **PROCEDE ET DISPOSITIF POUR LA FABRICATION D"UNE PIECE MECANIQUE, NOTAMMENT D"UNE BAGUE DE ROULEMENT, ET PIECE OBTENUE SELON CE PROCEDE**
VERFAHREN UND VORRICHTUNG ZUR HERSTELLUNG EINES MECHANISCHEN TEILS, INSBESONDERE EINES LAGERRINGS UND DURCH DIESES VERFAHREN ERZEUGTES TEIL
METHOD AND DEVICE FOR PRODUCING A MECHANICAL PART, IN PARTICULAR A BEARING RING AND A PART PRODUCED BY SAID METHOD

(30) Priorité: 03.09.2004 FR 0409321
(43) Date de publication de la demande: 30.05.2007
(73) Titulaire: Passoni, Gianfranco, 1473 Châtillon (CH)
(72) Inventeur: Passoni, Gianfranco, 1473 Châtillon (CH)
(74) Mandataire: Nithardt, Roland
(86) Numéro de dépôt international: PCT/CH2005/000521
(87) Numéro de publication internationale: WO 2006/024191

(56) Documents cités:
- GB-A- 852 359
- US-A- 3 451 467
- US-A- 3 927 450
- US-A- 5 101 547
- PATENT ABSTRACTS OF JAPAN vol. 2003, no. 12, 5 décembre 2003 (2003-12-05) & JP 2004 098090 A (JAPAN SCIENCE & TECHNOLOGY CORP), 2 avril 2004 (2004-04-02)

## Description

### Domaine technique

La présente invention concerne un procédé pour la fabrication d'une pièce mécanique de forme à géométrie circulaire, notamment une pièce annulaire telle qu'une bague de roulement réalisée en un alliage métallique susceptible d'être soumis à au moins un traitement thermique de durcissement, dans lequel l'on réalise par centrifugation dans un moule creux rotatif une ébauche de ladite pièce mécanique à partir d'un volume prédéterminé dudit alliage métallique porté à une température de fusion T_{1.} et dans lequel l'on refroidit ladite ébauche à une température T₂, inférieure à ladite température de fusion T₁, à laquelle ladite ébauche a une consistance malléable

Elle concerne également un dispositif pour la mise en oeuvre de ce procédé pour la fabrication d'une pièce mécanique de forme à géométrie circulaire, notamment d'une pièce annulaire telle qu'une bague de roulement réalisée en un alliage métallique susceptible d'être soumis à au moins un traitement thermique de durcissement, comportant un moule creux rotatif agencé pour recevoir le volume prédéterminé dudit alliage métallique, des moyens de chauffage pour porter cet alliage métallique à la température de fusion T₁ et des moyens d'entraînement pour entraîner ledit moule creux en rotation et réaliser une ébauche de la pièce mécanique par centrifugation.

### Technique antérieure

Les pièces mécaniques ayant une forme à géométrie circulaire et notamment de pièces annulaires comme des bagues de roulements à billes ou à aiguilles par exemple, sont généralement réalisées par des procédés connus de décolletage qui impliquent un usinage complexe et coûteux de la pièce à partir d'une barre de métal approprié, tel que de l'acier au chrome. A titre d'exemple, pour une bague de roulement à bille, les phases de cet usinage comprennent la mise en place de la barre de métal sur le mandrin d'un tour, le perçage intérieur, la mise en forme extérieure au moyen d'un burin de forme plongeant, l'usinage du chemin de roulement intérieur au moyen d'un outil pénétrant dans la cavité centrale et pouvant être déplacé latéralement, l'usinage des gorges pour loger les anneaux cache-poussière de part et d'autre du chemin de roulement, la coupe de la pièce, son lavage et son traitement thermique ou trempe.

Les opérations d'usinage sont toutes génératrices de copeaux puisqu'elles consistent à enlever de la matière de la barre de métal pleine, de section circulaire, qui constitue la matière première servant à la fabrication de la pièce. Etant donné que les alliages utilisés sont coûteux, la production de copeaux génère une perte non négligeable, la masse de copeaux produite au cours de l'usinage d'une pièce étant souvent supérieure à la masse de la pièce elle-même. En outre, pour chaque diamètre de pièce il convient de disposer d'une barre de métal brut de diamètre équivalent, ce qui implique une immobilisation et une gestion de stock considérable de barres d'alliages métalliques divers dont le prix de base est élevé. Enfin, chaque pièce correspond à une gamme d'outils de perçage, de fraisage et autres très importante dont il convient d'assurer la maintenance pour garantir une fabrication de qualité. En particulier, les machines de décolletage sont très coûteuses et l'investissement est relativement lourd pour un fabricant.

Tous ces inconvénients auxquels s'ajoute le fait que certains aciers extra durs se prêtent mal à ce type d'usinage classique et sont, par conséquent, peu utilisés pour des raisons économiques dans l'industrie courante, font que les méthodes connues sont difficiles à gérer dans un processus économique où la productivité est devenue un atout majeur.

Des essais plus ou moins satisfaisants ont été réalisés, mais ils n'ont pas abouti à des résultats satisfaisants en ce qui concerne à la fois la qualité et la productivité.

La publication GB 852 359 décrit un procédé de moulage par centrifugation de bagues en acier, dans lequel une quantité prédéterminée de métal fondu est prélevée d'un bac de métal en fusion pour être déversé dans un creuset de moulage. Le prélèvement de métal fondu en quantité prédéterminé est particulièrement délicat à réaliser avec un entonnoir de coulée pourvu d'une buse de distribution et d'un élément mécanique d'arrêt.

Le brevet américain US 3 927 450 décrit également un procédé de moulage par centrifugation de lingots creux en alliages métalliques, ces lingots étant ensuite usinés mécaniquement et coupés pour former les pièces mécaniques finies à géométrie circulaire que l'on souhaite réaliser.

Le brevet français FR 2516 825 décrit également un dispositif de moulage par centrifugation. Comme dans les documents précédents l'alliage fondu est prélevé dans un bac contenant la matière en fusion et la quantité requise est prélevée au moyen d'un récipient intermédiaire. Un tel dispositif d'approvisionnement est peu précis, complexe et coûteux.

Le brevet américain US 3 720 987 décrit un procédé de fabrication de bagues, notamment de roulements au moyen d'alliages métalliques d'acier au carbone, par centrifugation et qui est destiné à générer une migration des molécules d'acier vers l'extérieur et des molécules de carbone vers l'intérieur de la pièce moulée.

Le brevet américain US 5,101,547 décrit un procédé de moulage par centrifugation dans lequel la matière en fusion est prélevée d'un bain de matière première en fusion.

Tous ces procédés ne sont pas précis et fiables et ne permettent pas de réaliser des pièces de précision, à grande cadence et de façon économique et fiable, sachant que les bagues de roulements sont des pièces de grande consommation qui doivent être réalisées avec des tolérances de l'ordre du 1/000 ième de millimètre.

### Exposé de l'invention

Le but de l'invention est de supprimer l'ensemble de ces inconvénients en proposant de remplacer les procédés classiques d'usinage par enlèvement de copeaux d'alliages métalliques par une technique de mise en forme simple et économique permettant d'utiliser n'importe quel alliage métallique, même les alliages dits extra-durs, à partir d'un stock de matière première réduit et de combiner, dans certains cas, cette mise en forme avec au moins une phase du traitement thermique de la pièce.

Ce but est atteint par le procédé tel que défini en préambule et caractérisé en ce que l'on détermine le volume d'alliage métallique devant être fondu à partir d'une barre d'alliage métallique engagée à l'intérieur d'un four vertical de chauffage par induction ouvert à son extrémité inférieure au-dessus dudit moule creux, en ce que l'on amène ledit volume prédéterminé d'alliage métallique à ladite température de fusion T₁, en ce que l'on forme le profil intérieur de ladite pièce mécanique au moyen de moyens d'usinage amenés en appui contre sa surface intérieure au moment où ladite ébauche a atteint ladite température T₂, en ce que l'on extrait cette pièce dudit moule creux et on la porte à une température de trempe T₃, et en ce qu'on la refroidit de manière prédéterminée.

Selon un mode de réalisation avantageux, ladite barre de d'alliage métallique est pré-entaillée circulairement de manière à définir des segments de barre correspondant chacun soit audit volume prédéterminé de matière première requise pour fabriquer ladite pièce mécanique, soit à un sous-multiple entier de ce volume.
Selon une première variante, l'on peut introduire ladite quantité prédéterminée d'alliage métallique dans le moule sous la forme d'au moins une goutte formée par au moins un segment de barre fondu à ladite température T₁ dans le four vertical de chauffage, cette goutte s'étant détachée par gravité de la barre d'alliage métallique engagée à l'intérieur dudit four vertical de chauffage.

Selon une seconde variante, l'on peut introduire ladite quantité prédéterminée d'alliage métallique dans le moule creux sous la forme d'au moins un segment de barre, ledit segment s'étant détaché de ladite barre par chauffage de la barre dans les zones où elle est pré-entaillée, et en ce l'on porte ledit au moins segment de barre à la température de fusion T₁ par des moyens de chauffage entourant au moins partiellement ledit moule creux.

Ce but est également atteint par le dispositif pour la mise en oeuvre de ce procédé tel que défini en préambule et caractérisé en ce qu'il comporte
- des moyens pour déterminer le volume d'alliage métallique devant être fondu à partir d'une barre d'alliage métallique,
- des moyens de chauffage par induction pour fondre ledit volume prédéterminé d'alliage métallique et l'amener à la température T₁ dans le moule creux,
- des moyens pour refroidir ladite ébauche obtenue par centrifugation de l'alliage fondu dans le moule creux et l'amener à la température T₂, inférieure à ladite température de fusion T₁, à laquelle cette ébauche a une consistance malléable,
- des moyens d'usinage pour former le profil intérieur de ladite pièce mécanique,
- un dispositif de régulation de température pour porter la pièce mécanique obtenue à partir de ladite ébauche à une température de trempe T₃, et
- des moyens pour procéder à une trempe de ladite pièce mécanique (28) après son extraction du moule creux.

De façon avantageuse, lesdits moyens de détermination du volume d'alliage métallique devant être fondu sont formés par des pré-entailles ménagées circulairement sur la barre de manière à définir des segments de barre correspondant chacun soit au volume de matière première requise pour fabriquer ladite pièce mécanique, soit à un sous-multiple entier de ce volume.

Dans une première variante de réalisation, lesdits moyens de chauffage par induction peuvent comporter un four à induction vertical, ouvert à son extrémité inférieure au-dessus dudit moule creux, dans lequel est engagée la barre pré-entaillée dudit alliage métallique.

Dans une seconde variante de réalisation, lesdits moyens de chauffage par induction peuvent comporter un four à induction vertical, dans lequel est engagée la barre pré-entaillée dudit alliage métallique, et au moins une bobine d'induction entourant au moins partiellement ledit moule creux, la température du chauffage dans ledit four à induction étant dans ce cas définie pour fondre la barre seulement au niveau des pré-entailles et permettre ainsi le détachement des segments nécessaires pour obtenir le volume prédéterminé d'alliage métallique, lesdits segments étant ensuite fondus dans le moule et amenés à la température T₁ de fusion par la bobine d'induction.

De préférence, les moyens d'usinage comportent une molette profilée rotative associée à des moyens d'entraînement en rotation et à des moyens de déplacement axial et latéral pour l'amener en appui contre la surface intérieure de ladite ébauche afin de former le profil intérieur de ladite pièce mécanique.

Le moule creux peut être associé à un cache qui définit une paroi de moulage de ladite pièce mécanique.

De façon avantageuse, les moyens pour procéder à une trempe de ladite pièce mécanique comportent au moins un bain de trempe.

Dans toutes les variantes, le moule creux comporte un creuset agencé pour contenir le volume prédéterminé d'alliage métallique et une cavité de moulage qui communique avec ledit creuset.

Dans une variante de réalisation, le moule creux peut être constitué d'au moins deux segments mobiles radialement agencés pour permettre une ouverture de ce moule en vue de l'extraction de la pièce moulée.

Suivant la forme de réalisation, les moyens pour refroidir l'ébauche peuvent être agencés pour refroidir les parois extérieures du moule et/ou le cache.

### Description sommaire des dessins

La présente invention et ses avantages seront mieux compris à la lecture de la description détaillée d'une forme de mise en oeuvre du procédé de l'invention et de ses variantes, en référence aux dessins annexés donnés à titre indicatif et non limitatif, dans lesquels:
les figures 1A, 1B et 1C représentent schématiquement les différentes phases de fabrication par décolletage traditionnel d'une pièce mécanique en forme de bague de roulement par exemple,
les figures 2A, 2B, 2C, 2D, 2E, 2F et 2G représentent schématiquement le dispositif de l'invention et les différentes phases opératoires de fabrication d'une pièce mécanique en forme de bague de roulement selon un premier mode de mise en oeuvre du procédé de l'invention,
les figures 3A et 3B représentent schématiquement le dispositif de l'invention et les différentes phases opératoires de fabrication d'une pièce mécanique en forme de bague de roulement selon un second mode de mise en oeuvre du procédé de l'invention, et
la figure 4 est une vue de dessus d'une forme de réalisation particulière d'un moule creux utilisé dans le dispositif selon l'invention..

### Manière(s) de réaliser l'invention

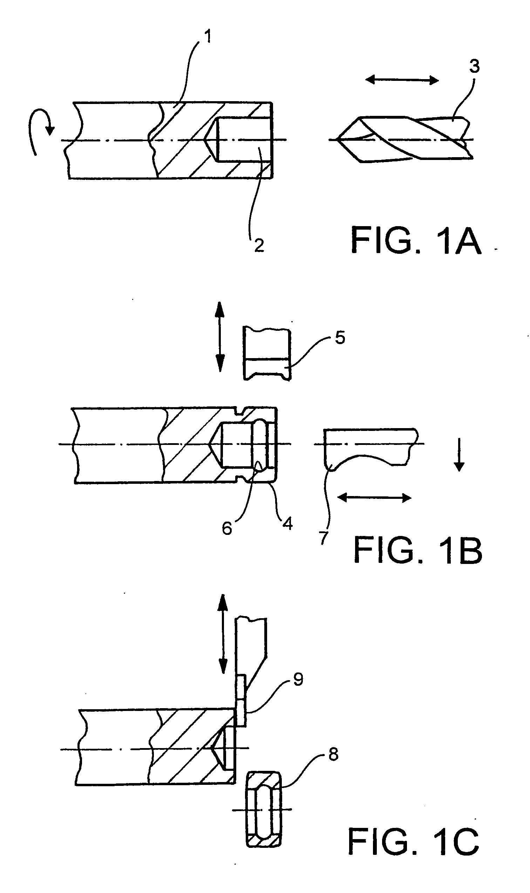

En référence à la figure 1A, la première phase du procédé de fabrication d'une pièce mécanique telle qu'une bague de roulement par décolletage classique, consiste par exemple à monter sur le mandrin d'un tour (non représenté), une barre 1 d'un alliage métallique approprié et d'effectuer un alésage central 2 au moyen d'un foret 3.

La figure 1B illustre deux phases suivantes qui peuvent être effectuées simultanément et qui consistent, d'une part, à usiner le contour extérieur 4 de la future pièce au moyen d'un outil de forme plongeant 5 et d'autre part à usiner le profil intérieur de la future pièce, par exemple le chemin de roulement 6 au moyen d'un outil de forme 7 à déplacement axial et latéral.

La figure 1C illustre la phase de coupe de la pièce mécanique usinée 8 au moyen d'un outil de coupe plongeant 9 qui détache la pièce de la barre métallique 1 afin de permettre le démarrage d'un nouveau cycle de production.

Ces opérations s'effectuent automatiquement à cadence élevée sur des machines à commande numérique. Elles génèrent une grande quantité de copeaux métalliques et les outils d'usinage doivent être affûtés régulièrement et ajustés en position pour compenser leur usure.

Le procédé selon l'invention permet de s'affranchir de toutes le contraintes liées à ce procédé de fabrication en améliorant encore le procédé connu de moulage de pièces par centrifugation. Les dimensions des pièces ainsi obtenues ne peuvent pas être garanties car le dosage du matériau à mouler n'est pas très fiable. Dans le procédé de l'invention cet inconvénient est supprimé par le fait que l'on détermine le volume d'alliage métallique devant être fondu à partir d'une barre d'alliage métallique engagée à l'intérieur d'un four vertical de chauffage par induction, cette barre étant divisée en segments égaux prédécoupés avec lesquels on pourra obtenir un volume d'alliage fondu prédéterminé toujours identique. L'on amène ensuite ce volume prédéterminé d'alliage métallique à la température de fusion de l'alliage pour former une ébauche par centrifugation dans un moule rotatif. Lorsque l'ébauche a encore une consistance malléable, l'on forme le profil intérieur de la pièce mécanique voulue au moyen d'un outil d'usinage tel qu'une molette profilée rotative amenée en appui contre sa surface intérieure et après extraction de la pièce du moule on la plonge dans un bain de trempe.

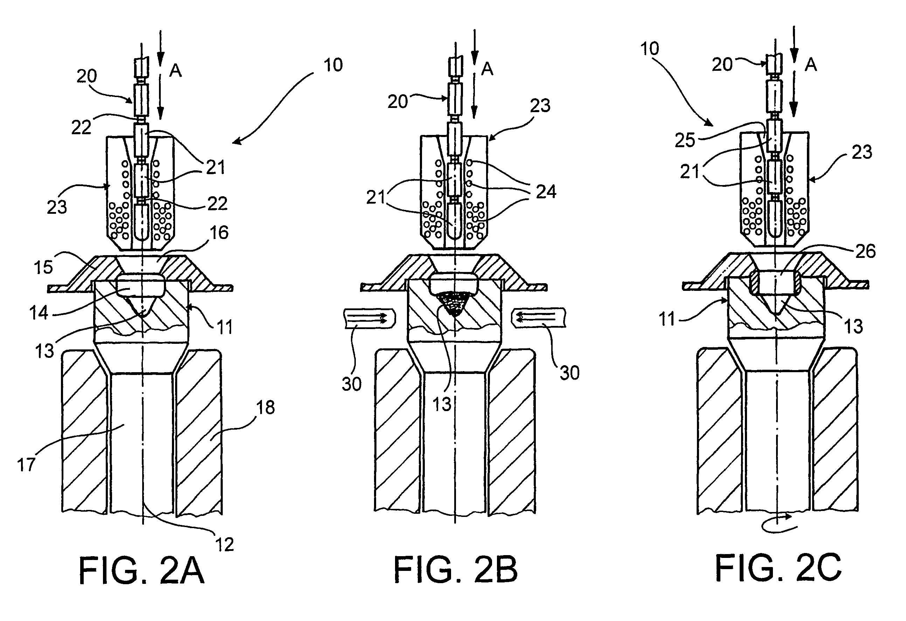

Ce procédé peut être mis en oeuvre sur un dispositif illustré par les figures 2A à 2G. Ce dispositif 10 comporte un moule creux 11, entraîné en rotation autour de son axe 12 et qui comporte un creuset 13 destiné à recevoir par exemple un alliage métallique à l'état fondu, ainsi qu'une cavité de moulage 14. Ce moule creux 11 est surmonté d'un cache 15 solidaire de ce moule et qui comporte une ouverture centrale 16. Le moule creux 11 est monté sur un support 17 qui est logé dans un bâti 18 portant des moyens d'entraînement en rotation du support 17 et du moule creux 11.

Au-dessus de cet équipement est disposé un dispositif d'amenée de la matière première utilisée pour la réalisation de la pièce mécanique, en l'occurrence un alliage métallique qui se présente par exemple sous la forme d'une barre 20 qui est formée de segments 21 reliés les uns aux autres par des gorges périphériques 22. Dans la pratique, un dispositif de fraisage (non représenté) usine les gorges périphériques 22 de manière prédéterminée et commandée automatiquement pour définir les segments 21. Cette barre 20 est engagée dan un four à induction vertical 23 de telle manière qu'une quantité de matière première soit fondue et tombe dans le creuset 13 du moule creux rotatif 11.

A cet effet, le four à induction vertical 23 comporte des bobines d'induction 24 dont les axes sont verticaux et correspondent à l'axe d'un canal central 25 qui correspond sensiblement à l'axe 12 du moule creux 11. Les bobines d'induction 24 sont disposées de telle manière que les segments 21 de la barre 20 qui sont amenés automatiquement dans le sens des flèches A sont d'abord préchauffés puis fondus. Chaque segment 21 a de préférence un volume égal ou qui correspond à un sous-multiple entier du volume de matière première nécessaire à la fabrication de la pièce mécanique.

Le fonctionnement de ce dispositif est expliqué ci-dessous en référence aux figures qui représentent les différentes étapes du procédé. La figure 2A montre le moule creux 11 recouvert du cache 15 et positionné sous le four à induction vertical 23 alimenté en matière première sous la forme d'une barre d'alliage métallique 20 divisée en segments 21 qui sont successivement préchauffés puis fondus dans le four.

La figure 2B montre la phase suivante où le volume de matière première fondue correspondant à au moins un segment 21 de la barre 20 est tombé par gravité dans le creuset 13. Dans cette phase, le moule creux peut être en position stationnaire ou en rotation à petite vitesse.

La figure 2C montre la phase de centrifugation au cours de laquelle le moule creux est entraîné à grande vitesse pour que la matière fondue dans le creuset soit projetée dans la cavité de moulage 14 par centrifugation pour prendre un profil qui correspond à une ébauche 26 de la pièce mécanique à produire. Le profil extérieur de la pièce finie correspond exactement à la forme périphérique de la cavité de moulage 14. On notera que le cache 15 est toujours en place puisqu'il définit une des parois de moulage de la cavité de moulage 14. On notera également que la barre 20 s'est déplacée de manière à amener l'un au moins de ses segments 21 dans le canal central 25 du four à induction vertical 23 en vue de la coulée suivante.

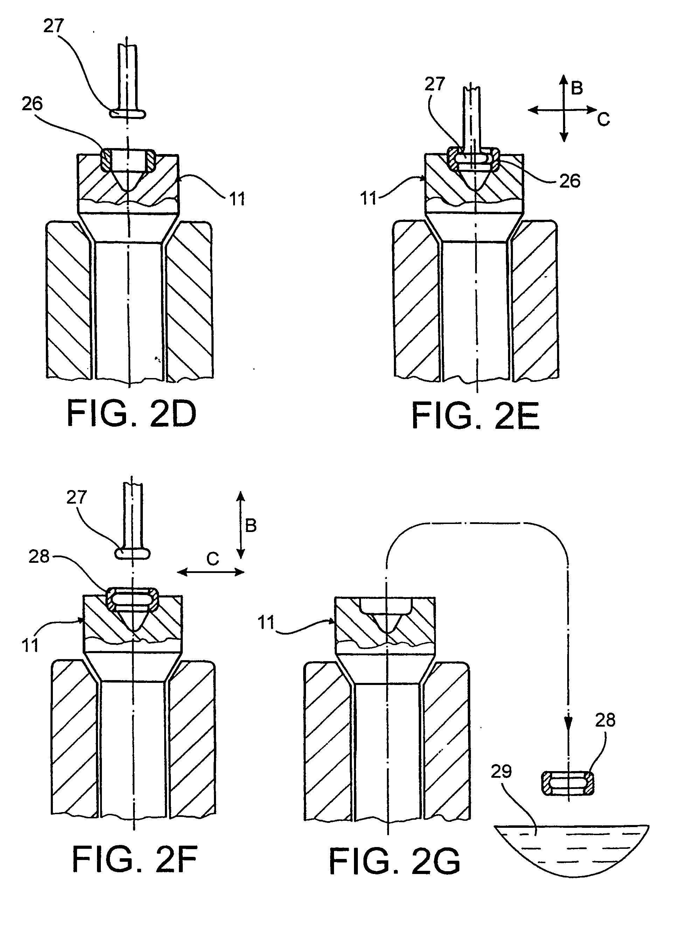

La figure 2D représente une phase d'attente au cours de laquelle l'ébauche 26 est refroidie par des moyens de refroidissement 30, par exemple des conduits de ventilation dirigés vers les parois extérieures du moule 11 et/ou le cache 15. Le four à induction a élevé la température de la matière première à une valeur T₁ qui correspond à la température de fusion de la matière. Cette température est abaissée par les moyens de refroidissement 30 au cours de cette phase du procédé à une valeur T₂ à laquelle l'alliage métallique est suffisamment malléable pour pouvoir être mis en forme par des moyens d'usinage appropriés. Ces moyens d'usinage sont représentés sous la forme d'une molette de formage 27 qui peut être entraînée en rotation autour de son axe. On notera que le cache 15 a été retiré au cours de cette étape.

La figure 2E représente la phase de formage au cours de laquelle le profil intérieur de la pièce mécanique est donné par la molette de formage 27, par appui sur l'ébauche 26 à l'état malléable, cette molette ayant été abaissée et introduite axialement dans la cavité du moule creux selon la flèche de direction B puis déplacée latéralement selon la flèche de direction C.

La figure 2F illustre la phase de retrait de la molette de formage 27 hors du moule creux 11 après la mise en forme de la pièce mécanique 28. Cette pièce est ensuite extraite du moule creux 11 par des moyens de préhension connus en soi et qui ne sont pas décrits ici.

La figure 2G illustre schématiquement la phase de transfert de la pièce moulée 28 extraite du moule creux 11 dans un bain de trempe 29 lorsque, à l'aide d'un dispositif de régulation de la température (non représenté), elle a atteint la température T₃ permettant cette trempe. Un nouveau cycle de fabrication peut être démarré immédiatement après le retrait de la pièce 28 du moule 11. Le cas échéant, le moule peut être changé en vue de la fabrication d'une autre pièce.

Ces différentes phases du procédé peuvent être accomplies dans une atmosphère contrôlée pour éviter l'oxydation ou la corrosion suivant l'alliage métallique utilisé.

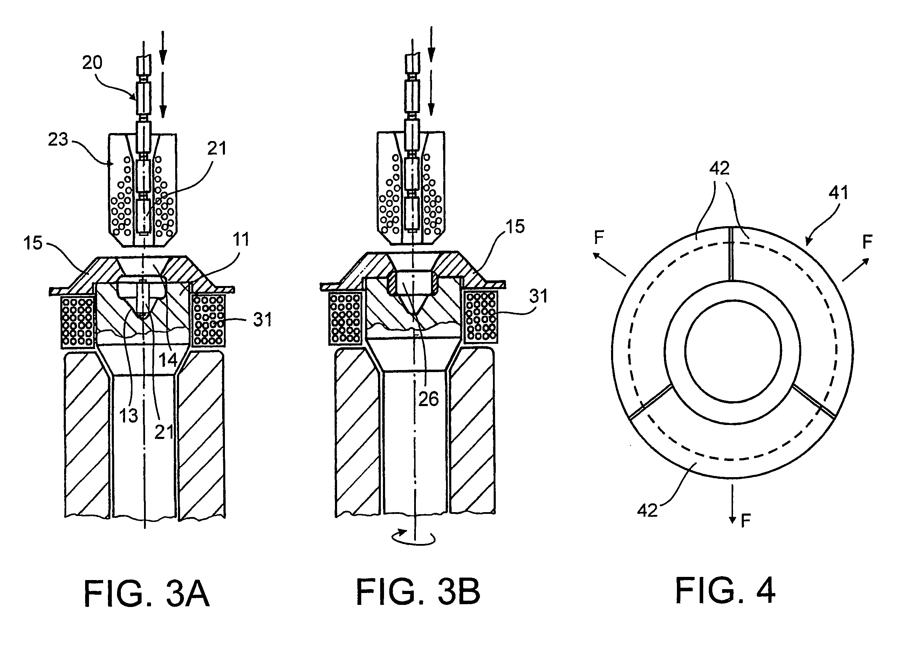

Dans une seconde forme de réalisation du dispositif illustré par les figures 3A et 3B, la matière première, à savoir l'alliage métallique, est fondue directement dans creuset 13 du moule creux 11 et les moyens de chauffage sous la forme de bobines d'induction 31 sont disposés autour du moule creux 11. Dans cette variante, le four vertical 23 est utilisé à une température inférieure à celle de la première forme de réalisation de façon que seule la zone de séparation de deux segments 21 consécutifs puisse fondre afin de détacher un segment 21 de la barre 20. Ce ou ces segments, suivant le volume prédéterminé nécessaire à la fabrication de la pièce, tombent dans le moule 11 où ils sont portés à la température de fusion T₁ par les moyens de chauffage entourant ledit moule.

Les autres composants du dispositif sont sensiblement les mêmes et, lorsque l'alliage métallique est fondu, l'opération de centrifugation par rotation du moule creux autour de son axe permet de réaliser une ébauche 26 dont le traitement est le même que celui décrit ci-dessus pour aboutir à la pièce finale.

Dans les deux variantes du dispositif selon l'invention décrites précédemment, le moule creux est surmonté du cache 15. La pièce peut être retirée du moule creux après retrait de ce cache.

La figure 4 représente une variante permettant d'obtenir des pièces mécaniques comportant un profilé sur son pourtour extérieur. Dans ce cas, le retrait de la pièce finie nécessite l'ouverture du moule creux et ledit moule creux 41 ne comporte pas de cache et est constitué d'au moins deux segments. Ces segments 42, au nombre de trois sur l'exemple illustré, se déplacent radialement dans le sens des flèches F pour permettre l'extraction automatique de la pièce au moyen d'un robot de préhension (non représenté).

Les formes de réalisation préférées décrites peuvent subir différentes modifications et peuvent être intégrées dans un carrousel équipé de différents poste de travail. Il est également possible d'utiliser un alliage sous la forme de particules divisées, par exemple des grains ou des granulés. contenus dans un doseur. Dans ce cas, le dosage de la quantité de particules nécessaires peut se faire par pesée ou par mesure volumétrique, afin que le volume des particules corresponde à celui de la pièce à réaliser. Les particules de matière première sont déversées à froid dans le creuset d'un moule creux équipé de moyens de chauffage tels que décrits en référence à la deuxième forme de réalisation.

## Revendications

1. Procédé pour la fabrication d'une pièce mécanique de forme à géométrie circulaire, notamment d'une pièce annulaire telle qu'une bague de roulement réalisée en un alliage métallique susceptible d'être soumis à au moins un traitement thermique de durcissement, dans lequel l'on réalise par centrifugation dans un moule creux rotatif une ébauche de ladite pièce mécanique à partir d'un volume prédéterminé dudit alliage métallique porté à une température de fusion T_{1,} et dans lequel l'on refroidit ladite ébauche à une température T₂, inférieure à ladite température de fusion T₁, à laquelle ladite ébauche a une consistance malléable, **caractérisé en ce que** l'on détermine le volume d'alliage métallique devant être fondu à partir d'une barre d'alliage métallique engagée à l'intérieur d'un four vertical de chauffage par induction ouvert à son extrémité inférieure au-dessus dudit moule creux, **en ce que** l'on amène ledit volume prédéterminé d'alliage métallique à ladite température de fusion T₁, **en ce que** l'on forme le profil intérieur de ladite pièce mécanique au moyen d'un outil d'usinage amené en appui contre sa surface intérieure au moment où ladite ébauche a atteint ladite température T₂, **en ce que** l'on extrait cette pièce dudit moule creux et on la porte à une température de trempe T₃, et **en ce qu'**on la refroidit de manière prédéterminée.

2. Procédé selon la revendication 1, **caractérisé en ce que** ladite barre de d'alliage métallique est pré-entaillée circulairement de manière à définir des segments de barre correspondant chacun soit audit volume prédéterminé de matière première requise pour fabriquer ladite pièce mécanique, soit à un sous-multiple entier de ce volume.

3. Procédé selon les revendications 1 et 2, **caractérisé en ce que** l'on introduit ladite quantité prédéterminée d'alliage métallique dans le moule sous la forme d'au moins une goutte formée par au moins un segment de barre fondu à ladite température T₁ dans le four vertical de chauffage, cette goutte s'étant détachée par gravité de la barre d'alliage métallique engagée à l'intérieur dudit four vertical de chauffage.

4. Procédé selon les revendications 1 et 2, **caractérisé en ce que** l'on introduit ladite quantité prédéterminée d'alliage métallique dans le moule creux sous la forme d'au moins un segment de barre, ledit segment s'étant détaché de ladite barre par chauffage de la barre dans les zones où elle est pré-entaillée, et en ce l'on porte ledit au moins segment de barre à la température de fusion T₁ par des moyens de chauffage entourant au moins partiellement ledit moule creux.

5. Dispositif pour la fabrication selon le procédé de la revendication 1 d'une pièce mécanique de forme à géométrie circulaire, notamment d'une pièce annulaire telle qu'une bague de roulement réalisée en un alliage métallique susceptible d'être soumis à au moins un traitement thermique de durcissement, comportant un moule creux (11; 41) rotatif agencé pour recevoir le volume prédéterminé dudit alliage métallique, des moyens de chauffage pour porter cet alliage métallique à la température de fusion T₁ et des moyens d'entraînement pour entraîner ledit moule creux en rotation et réaliser une ébauche (26) de la pièce mécanique par centrifugation, **caractérisé en ce qu'**il comporte
- des moyens pour déterminer le volume d'alliage métallique devant être fondu à partir d'une barre (20) d'alliage métallique,
- des moyens de chauffage par induction pour fondre ledit volume prédéterminé d'alliage métallique et l'amener à la température T₁ dans le moule creux,
- des moyens (30) pour refroidir ladite ébauche (26) obtenue par centrifugation de l'alliage fondu dans le moule creux et l'amener à la température T₂, inférieure à ladite température de fusion T₁, à laquelle cette ébauche (26) a une consistance malléable,
- des moyens d'usinage pour former le profil intérieur de ladite pièce mécanique (28),
- un dispositif de régulation de température pour porter la pièce mécanique (28) obtenue à partir de ladite ébauche à une température de trempe T_{3,} et
- des moyens pour procéder à une trempe de ladite pièce mécanique (28) après son extraction du moule creux.

6. Dispositif selon la revendication 5, **caractérisé en ce que** lesdits moyens de détermination du volume d'alliage métallique devant être fondu sont formés par des pré-entailles ménagées circulairement sur la barre (20) de manière à définir des segments (21) de barre correspondant chacun soit au volume de matière première requise pour fabriquer ladite pièce mécanique (28), soit à un sous-multiple entier de ce volume.

7. Dispositif selon la revendication 5, **caractérisé en ce que** lesdits moyens de chauffage par induction comporte un four à induction vertical (23), ouvert à son extrémité inférieure au-dessus dudit moule creux, dans lequel est engagée la barre (20) pré-entaillée dudit alliage métallique.

8. Dispositif selon les revendications 5 à 7, **caractérisé en ce que** lesdits moyens de chauffage par induction comportent un four à induction vertical (23) dans lequel est engagée la barre (20) pré-entaillée dudit alliage métallique et au moins une bobine d'induction (31) entourant au moins partiellement ledit moule creux (11), la température du chauffage dans ledit four à induction (23) étant définie pour fondre la barre (20) seulement au niveau des pré-entailles (21) et permettre ainsi le détachement des segments (21) nécessaires pour obtenir le volume prédéterminé d'alliage métallique, lesdits segments étant ensuite fondus dans le moule (11) et amenés à la température de fusion T₁ par la bobine d'induction (31).

9. Dispositif selon la revendication 5, **caractérisé en ce que** les moyens d'usinage comportent une molette profilée rotative (27) associée à des moyens d'entraînement en rotation et à des moyens de déplacement axial et latéral pour l'amener en appui contre la surface intérieure de ladite ébauche (26) afin de former le profil intérieur de ladite pièce mécanique.

10. Dispositif selon la revendication 5, **caractérisé en ce que** le moule creux (11) est associé à un cache (15) qui définit une paroi de moulage de ladite pièce mécanique.

11. Dispositif selon la revendication 5, **caractérisé en ce que** les moyens pour procéder à une trempe de ladite pièce mécanique (28) comportent au moins un bain de trempe (29).

12. Dispositif selon la revendication 5, **caractérisé en ce que** le moule creux (41) est constitué d'au moins deux segments mobiles (42) radialement agencés pour permettre une ouverture de ce moule en vue de l'extraction de la pièce moulée.

13. Dispositif selon les revendications 5 et 12, **caractérisé en ce que** le moule creux (11; 41) comporte un creuset (13) agencé pour contenir le volume prédéterminé d'alliage métallique et une cavité de moulage (14) qui communique avec ledit creuset (13).

14. Dispositif selon les revendications 5, 10 et 12, **caractérisé en ce que** les moyens pour refroidir l'ébauche (26) sont agencés pour refroidir les parois extérieures du moule (11; 41) et/ou le cache (15).

## Claims

1. Method for producing a circular-shaped mechanical part, in particular an annular-shaped part such as a bearing race made of a metal alloy that can be subjected to at least one thermal hardening treatment, in which a blank of this mechanical part is produced through centrifugation in a rotating hollow mould from a predetermined volume of said metal alloy brought to a melting temperature T₁, and in which said blank is cooled to a temperature T₂ lower than said melting temperature T₁, at which said blank has a malleable consistency, **characterized in that** the volume of metal alloy to be melted is determined from a metal alloy bar inserted inside a vertical induction oven open at its lower end above the hollow mould, **in that** said predetermined volume of metal alloy is brought to the melting temperature T₁, **in that** the interior profile of the mechanical part is formed using a machining tool brought into contact with its interior surface when said blank has reached said temperature T₂, **in that** this part is extracted from said hollow mould and is brought to a tempering temperature T₃, and **in that** it is cooled in a predetermined manner.

2. Method according to claim 1, **characterized in that** said metal alloy bar is pre-notched circularly to define bar segments each corresponding either to the predetermined volume of raw material required to produce the mechanical part or to a whole sub-multiple of this volume.

3. Method according to claims 1 and 2, **characterized in that** said predetermined quantity of metal alloy is introduced into the mould in the form of at least one drop formed by at least one bar segment melted at said temperature T₁ in the vertical heating oven, this drop being detached by the force of gravity from the metal alloy bar inserted inside said vertical heating oven.

4. Method according to claims 1 and 2, **characterized in that** said predetermined quantity of metal alloy is inserted into the hollow mould in the form of at least one bar segment, said segment being detached from the bar by heating the bar in the areas where it is pre-notched, and **in that** at least said bar segment is brought to the melting temperature T₁ by heating means at least partially surrounding said hollow mould.

5. Device for manufacturing according to the method of claim 1 a circular-shaped mechanical part, in particular a ring-shaped part such as a bearing race made of a metal alloy capable of undergoing at least one thermal hardening treatment, comprising a rotating hollow mould (11; 41) designed to receive the predetermined volume of said metal alloy, heating means designed to bring this metal alloy to the melting temperature T₁ and drive means designed to cause said hollow mould to rotate and produce a blank (26) of the mechanical part through centrifugation, **characterized in that** it comprises
- means for determining the volume of metal alloy to be melted from a metal alloy bar (20),
- induction heating means for melting said predetermined volume of metal alloy and bring it to the temperature T₁ in the hollow mould,
- means (30) for cooling the blank (26) obtained through centrifugation of the molten alloy in the hollow mould and for bringing it to the temperature T₂ lower than the melting temperature T₁ at which this blank (26) has a malleable consistency,
- machining means for forming the interior shape of said mechanical part (28),
- a temperature regulation device to bring the mechanical part (28) obtained from this blank to a tempering temperature T₃, and
- means for tempering said mechanical part (28) after it is extracted from the hollow mould.

6. Device according to claim 5, **characterized in that** said means for determining the volume of metal alloy to be melted consist of preliminary circular notches made on the bar (20) to define bar segments (21) corresponding either to the volume of raw material required to produce the mechanical part (28) or to a whole sub-multiple of this volume.

7. Device according to claim 5, **characterized in that** said induction heating means comprise a vertical induction oven (23), open at its lower end above said hollow mould, into which the pre-notched bar (20) of said metal alloy is inserted.

8. Device according to claims 5 to 7, **characterized in that** said induction heating means comprise a vertical induction oven (23) into which the pre-notched bar (20) of said metal alloy is inserted and at least one induction coil (31) at least partially surrounding said hollow mould (11), the heating temperature into said induction oven (23) being defined to melt the bar (20) only in the pre-notched areas (21) and thus allow the detachment of the segments (21) necessary to obtain the predetermined volume of metal alloy, said segments then being melted into the mould (11) and brought to the melting temperature T₁ by the induction coil (31).

9. Device according to claim 5, **characterized in that** the machining means comprise a rotating shaping tool (27) combined with means to cause it to rotate and means of axial and lateral movement to bring it into contact with the interior face of said blank (26) in order to form the interior shape of said mechanical part.

10. Device according to claim 5, **characterized in that** the hollow mould (11) is combined with a mask (15) that forms a casting wall of said mechanical part.

11. Device according to claim 5, **characterized in that** means for tempering said mechanical part (28) comprises at least a tempering bath (29).

12. Device according to claim 5, **characterized in that** the hollow mould (41) consists of at least two radially mobile segments (42) arranged to allow an opening of this mould in order to extract the cast part.

13. Device according to claims 5 and 12, **characterized in that** the hollow mould (11; 41) comprises a crucible (13) designed to contain the predetermined volume of metal alloy and a casting cavity (14) that communicates with said crucible (13).

14. Device according to claims 5, 10 and 12, **characterized in that** means for cooling the blank (26) are arranged to cool the exterior walls of the mould (11; 41) and/or the mask (15).

## Patentansprüche

1. Verfahren zur Herstellung eines Maschinenteils mit kreisförmiger geometrischer Form, insbesondere eines ringförmigen Teils wie zum Beispiel eines Laufringes, der aus einer Metalllegierung hergestellt ist, die in der Lage ist, mindestens eine Thermowärmehärtungsbehandlung zu durchlaufen, wobei durch Zentrifugieren in einer drehbaren hohlen Pressform ein Rohling des Maschinenteils von einem zuvor festgelegten Volumen der Metalllegierung hergestellt wird, der auf eine Schmelzpunkttemperatur T₁ gebracht wird, und wobei der Rohling auf eine Temperatur T₂ abgekühlt wird, die unter der Schmelzpunkttemperatur T₁ liegt, bei welcher der Rohling eine formbare Konsistenz aufweist,
**dadurch gekennzeichnet, dass**
das Volumen der Metalllegierung, welches aus einem Barren einer Metalllegierung zu schmelzen ist, der im Inneren eines Turmofens mit Induktionserwärmung in Eingriff steht, der an seinem untersten äußersten Ende über der hohlen Pressform offen ist, bestimmt wird, indem das zuvor festgelegte Volumen der Metalllegierung auf die Schmelzpunkttemperatur T₁ gebracht wird, wobei das Innenprofil des Maschinenteils mittels eines Bearbeitungswerkzeuges geformt wird, welches in dem Moment zum Anliegen gegen die Innenfläche gebracht wird, in dem der Rohling die Temperatur T₂ erreicht, wobei das Teil aus der Pressform entfernt und auf eine Abschrecktemperatur T₃ gebracht wird, und wobei es auf zuvor festgelegte Art abgekühlt wird.

2. Verfahren nach Anspruch 1,
**dadurch gekennzeichnet, dass**
der Barren der Metalllegierung vorher kreisförmig eingekerbt wird, so dass Barrensegmente festgelegt werden, die jeweils entweder dem zuvor festgelegten Volumen aus Rohwerkstoff, welches zur Herstellung des Maschinenteils erforderlich ist, oder einem ganzzahligen Teiler dieses Volumens entsprechen.

3. Verfahren nach den Ansprüchen 1 und 2,
**dadurch gekennzeichnet, dass**
die zuvor festgelegte Menge an Metalllegierung in die Pressform in Form mindestens eines Tropfens eingeleitet wird, der aus mindestens einem Barrensegment ausgebildet ist, welches in dem Heizofen bei der Temperatur T₁ geschmolzen wird, wobei sich der Tropfen durch Schwerkraft von dem in dem Inneren des Turmheizofens in Eingriff stehenden Barren aus Metalllegierung löst.

4. Verfahren nach den Ansprüchen 1 und 2,
**dadurch gekennzeichnet, dass**
die zuvor festgelegte Menge an Metalllegierung in Form mindestens eines Barrensegmentes in die Pressform eingeleitet wird, wobei sich das Barrensegment durch Erwärmung des Barrens in den Zonen von dem Barren löst, in denen er zuvor eingekerbt wurde, und wobei mindestens das Barrensegment durch Heizeinrichtungen auf die Schmelzpunkttemperatur T₁ gebracht wird, welche die Pressform mindestens teilweise umgeben.

5. Vorrichtung zur Herstellung eines Maschinenteils mit kreisförmiger geometrischer Form nach Anspruch 1, insbesondere eines ringförmigen Teils wie zum Beispiel eines Laufringes, der aus einer Metalllegierung hergestellt ist, die in der Lage ist, mindestens eine Thermowärmehärtungsbehandlung zu durchlaufen, die eine drehbare hohle Pressform (11;41) aufweist, die angeordnet ist, um das zuvor festgelegte Volumen der Metalllegierung aufzunehmen, Heizeinrichtungen, um die Metalllegierung auf die Schmelzpunkttemperatur T₁ zu bringen, und Antriebseinrichtungen, um die hohle Pressform mit einer Drehung anzutreiben und durch dieses Zentrifugieren einen Rohling (26) des Maschinenteils herzustellen,
**dadurch gekennzeichnet, dass**
sie Folgendes aufweist
- Einrichtungen zur Bestimmung des Volumens an Metalllegierung, welches aus einem Barren (20) einer Metalllegierung zu schmelzen ist,
- Induktionserwärmungseinrichtungen zum Schmelzen des zuvor festgelegten Volumens an Metalllegierung und um diese in der hohlen Pressform auf die Temperatur T₁ zu bringen,
- Einrichtungen (30) zum Abkühlen des durch Zentrifugieren der geschmolzenen Metalllegierung in der hohlen Pressform erhaltenen Rohlings (26) und Bringen desselben auf eine Temperatur T₂, die unter der Schmelzpunkttemperatur T₁ liegt, bei welcher der Rohling (26) eine geschmeidige Konsistenz aufweist.
- Bearbeitungseinrichtungen zur Ausbildung des Innenprofils des Maschinenteils (28),
- eine Vorrichtung zur Temperaturregelung, um das aus dem Rohling erhaltene Maschinenteil (28) auf eine Abschrecktemperatur T₃ zu bringen, und
- Einrichtungen zur Durchführung einer Abschreckung des Maschinenteils (28) nach dem Entfernen desselben aus der hohlen Pressform.

6. Vorrichtung nach Anspruch 5,
**dadurch gekennzeichnet, dass**
die Einrichtungen zur Bestimmung des Volumens der Metalllegierung, welches zu schmelzen ist, aus vorher kreisförmig auf dem Barren (20) eingebrachten Einkerbungen ausgebildet sind, so dass Barrensegmente (21) festgelegt werden, die jeweils entweder dem Volumen aus Rohwerkstoff, welches zur Herstellung des Maschinenteils (28) erforderlich ist, oder einem ganzzahligen Teiler dieses Volumens entsprechen.

7. Vorrichtung nach Anspruch 5,
**dadurch gekennzeichnet, dass**
die Induktionserwärmungseinrichtungen einen Induktionsturmofen (23) umfassen, der an seinem untersten äußersten Ende über der hohlen Pressform offen ist, in dem der vorher eingekerbte Barren (20) aus Metalllegierung in Eingriff steht.

8. Vorrichtung nach den Ansprüchen 5 bis 7,
**dadurch gekennzeichnet, dass**
die Induktionserwärmungseinrichtungen einen Induktionsturmofen (23) umfassen, in dem der vorher eingekerbte Barren (20) aus Metalllegierung und mindestens eine Induktorspule (31) in Eingriff stehen, die mindestens teilweise die hohle Pressform (11) umgibt, wobei die Erwärmungstemperatur der Heizung in dem Induktionsofen (23) festgelegt wird, um den Barren (20) ausschließlich auf der Höhe der vorher eingebrachten Kerben (23) zu schmelzen und so das Lösen von Segmenten zuzulassen, die notwendig sind, um das zuvor festgelegte Volumen an Metalllegierung zu erhalten, wobei die Segmente nachfolgend in der Pressform (11) geschmolzen, und durch die Induktorspule (31) auf die Schmelzpunkttemperatur T₁ gebracht werden.

9. Vorrichtung nach Anspruch 5,
**dadurch gekennzeichnet, dass**
die Bearbeitungseinrichtungen eine profilierte Drehrolle (27) umfassen, die mit Drehantriebseinrichtungen und mit Einrichtungen zur axialen und seitlichen Verlagerung verbunden ist, um sie gegen die Innenfläche des Rohlings (26) zum Anliegen zu bringen, um das Innenprofil des Maschinenteils auszubilden.

10. Vorrichtung nach Anspruch 5,
**dadurch gekennzeichnet, dass**
die hohle Pressform (11) mit einer Abdeckvorrichtung (15) verbunden ist, die eine Pressformwand des Maschinenteils ausbildet.

11. Vorrichtung nach Anspruch 5,
**dadurch gekennzeichnet, dass**
die Einrichtungen zur Durchführung einer Abschreckung des Maschinenteils (28) mindestens ein Abschreckbad (29) umfassen.

12. Vorrichtung nach Anspruch 5,
**dadurch gekennzeichnet, dass**
die hohle Pressform (41) aus mindestens zwei beweglichen Segmenten (42) besteht, die radial angeordnet sind, um eine Öffnung der Pressform im Hinblick auf das Entfernen des Pressformteils zuzulassen.

13. Vorrichtung nach den Ansprüchen 5 und 12,
**dadurch gekennzeichnet, dass**
die hohle Pressform (11;41) einen Tiegel (13) aufweist, der angeordnet ist, um das zuvor festgelegte Volumen an Metalllegierung zu enthalten, sowie einen mit dem Tiegel (13) in Verbindung stehenden Formhohlraum (14).

14. Vorrichtung nach den Ansprüchen 5, 10 und 12,
**dadurch gekennzeichnet, dass**
die Einrichtungen zum Abkühlen des Rohlings (26) angeordnet sind, um die Außenwände der Pressform (11;41) und/oder die Abdeckung (15) abzukühlen.
